# EUROPEAN PATENT APPLICATION

(11) **EP 3 375 336 A1**
(43) Date of publication of application: **19.09.2018**
(21) Application number: 18461536.7
(22) Date of filing: 16.03.2018
(51) Int. Cl.: A47J 47/14

(54) **CLOSING SYSTEM FOR CONTAINER, PARTICULARLY IN A FORM OF BAG FOR TRANSPORTING PIZZA AND CONTAINER PROVIDED WITH CLOSING SYSTEM**

(30) Priority: 16.03.2017 PL 42086717
(71) Applicant: Furmanski, Tomasz, 39-300 Mielec (PL)
(72) Inventor: Furmanski, Tomasz, 39-300 Mielec (PL)
(74) Representative: AOMB Polska Sp. z.o.o.

(57) **Abstract**

The object of the invention is a closing system for a container, particularly in a form of a bag for transporting pizza, and a container provided with a closing system.

A closing system for a container, comprising a bottom (6), side walls (5) and a lid (7) with a leading edge having an extension (10) overlapping the side wall (5). Said system comprises magnets (1, 4) and metal elements (2, 3) with magnetic properties fixed to the extension of the lid (10) and to the side wall (5) which the extension overlaps, the magnets (1, 4) and the metal plates (2, 3) with magnetic properties being fixed generally along and on both sides of the bending line (9) of the connecting element (8) that connects a side edge of the lid (7) to an edge of the side wall (5) delimiting the opening of the container, wherein the bending line (9) divides the connecting element (8) into two parts.

## Description

The object of the present invention is a closing system for a container and a container provided with said system. More precisely, the invention relates to a closing system utilising magnets, used in a thermal bag for transporting pizza.

Thermal bags available so far, in particular for transporting pizzas, are usually closed using touch fasteners made of plastic. Loops and hooks forming touch fasteners are fixed on fragments of a lid of a bag and on edges of walls of a bag. For example, patent application US 5454471 discloses this type of construction. The lid of the bag is fixedly connected to the bag by one edge, while the remaining three edges are slightly extended, forming a kind of overlaps, which when closing the bag with the lid overlap and cover part of the neighbouring walls of the bag. The loops and hooks placed on the overlaps and parts of bag walls which are close to the edge then connect. In this solution, the loops and hooks fasteners are fixed to a part of the bag in the form of several straps.

American patent application US 6048099 discloses a closure of a similar type of bag, the difference being that straps with hooks and loops are present on the whole surface of the overlapping extensions of the lid and in the form of a continuous strip along the edges of bag walls which the overlaps of the lid are supposed to overlap.

Patent application US 2012152963 proposes another closing system - by the use of magnets at the ends of strongly elongated extensions of the edges of the closing lid.

Unfortunately, these types of connections utilising hooks and loops have numerous disadvantages when used to close thermal bags, e.g. for transporting pizza.

First of all, when closing/opening a bag, each of the three overlaps has to be disconnected which requires several hand movements, the lid being able to tilt only after unfastening each overlap. Already opened touch fasteners may be unintentionally connected again, due to which opening a pizza bag may become unnecessarily complicated and prolonged.

In addition, closing a bag with one hand may not ensure tight pressing of the lid, causing excessive cooling of the transported products and dissatisfaction of customers.

Furthermore, touch fasteners wear over time, and even bags which are tight at the beginning of using stop serving their functions with time.

A known solution consisting of placing magnets at the long ends of the extensions of the edges of the lid does not guarantee effective closure either, since the long ends of the lid still do not allow closing with one move using only one hand, and small-sized magnets do not guarantee easy adjustment of the elements of the lid of the bag.

In the light of known solutions there is a clear need to provide a bag for transporting pizza with a closure which would guarantee easy opening/closing using only one hand, and which would provide high tightness of closing.

The above objectives are fulfilled by a closing system according to the present invention.

A closing system of a container according to the invention, suitable for use with a container comprising a bottom, side walls whose edges delimit an opening, while the bottom along with the side walls delimit a storage space of the container, and a lid closing the opening of the container, said lid having a leading edge with an extension overlapping the side wall. The closing system comprises the magnets and metal elements with magnetic properties fixed to the extension of the lid and to the side wall which the extension overlaps, together serving the closing function. According to the essence of the invention, the magnets and the metal plates with magnetic properties are fixed generally along and on both sides of a bending line of a connecting element that connects a side edge of the closing lid to an edge of the side wall delimiting the opening of the container, wherein the bending line divides the connecting element into two parts. Forces acting between the magnets and the metal plates cause the connecting element to fold inside the container along the bending line, forming a tight closure which can be easily opened/closed with only one hand.

Preferably, the container has a cuboidal shape.

Preferably, the connecting element has the shape of a triangular element whose bending line divides it into two symmetrical and triangular halves.

Preferably, the magnets and the metal plates are sewn inside the triangular halves of the connecting elements, symmetrically in relation to the bending line.

Preferably, along the whole extension of the lid one or several metal plates are sewn inside, while the magnets are sewn inside along the whole edge of the wall which the extension of the lid overlaps.

In another aspect of the present invention, a container comprising a bottom, side walls and a closing lid is provided with a closing system as described above.

The container is preferably a thermal bag for transporting pizza.

The invention will now be presented in more detail in a preferable embodiment, with reference to the attached drawings, in which:

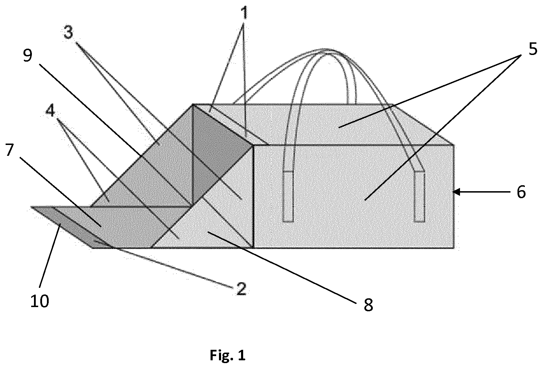

Fig. 1 presents the pizza bag in an open position, while
Fig. 2 presents the pizza bag in a closed position.

### A preferred embodiment of the invention

In a one embodiment a bag for transporting pizza has a body which is formed by a bottom 6 and side walls 5 connected to the bottom 6. The bag has a closing lid 7 connected to one of the walls 5 via one of the longer edge being connected to the edge of the wall 5 of the cuboidal bag for transporting pizzas, and via the side edges of the lid 7. The side edges of the lid 7 are connected to the edges of the side walls 5 of the bag via a triangular connecting element 8, which while closing the bag folds in half and enters inside the bag for transporting pizza.

The leading edge of the lid 7 which is not fixedly connected to the bag has an extension 10, which in a closed position of the bag covers a part of the upper wall 5 of the cuboidal bag, covering its edge.

Such a construction of the lid of the bag for transporting pizzas provides the possibility to open and close the bag with one hand, when the other hand holds the bag by, e.g. strap handles 11 presented in the figures by a dashed line. With such a construction, opening/closing the bag only requires catching the extension of the edge of the lid 10 and pulling it from the bag/moving it back towards the bag and placing against the upper surface of the bag.

A tightness of closing the bag is provided by utilising magnets 1, 4 and metal plates 2, 3.

Bar magnets 1 are sewn inside the material of the upper wall 5 of the cubical bag for transporting pizzas - along the edges. Sewing inside one long magnet 1 could needlessly stiffen the edge of the bag, risking breaking the magnet during transport, due to which there are preferably provided between two and ten magnets sewn inside one next to another, more preferably between three and six magnets, e.g. five magnets.

The metal plate 2 is sewn inside the material of the extension of the lid 10 along the whole edge of the lid 7. The metal plate 2 is preferably made of a material with magnetic properties, due to which upon approaching the edges of the bag with bar magnets 1 sewn inside it is attracted by them and causes the extension of the lid 10 to become adjacent to the upper part of the wall 5 of the cuboidal bag for transporting pizzas along the whole edge of the bag. The presence of metal and magnets along the whole edge guarantees tight closing, which will not weaken while used, as it happens in the case of touch fastener connections. The metal plate 2 may be one plate or it may be several plates placed next to each other - e.g. 2, 3, 4, 5 or 6 plates, in order to decrease the stiffness of the edges of the lid 7, which during use could be permanently bent if it was only one plate.

Additional elements guaranteeing tight closing of the bag for transporting pizzas are metal plates 3 and magnets 4, which are sewn inside triangular connecting elements 8. For example, metal plates 3 may be sewn inside the halves of the triangular connecting elements 8 connected to the body of the bag, and magnets 4 may be sewn inside the halves of the triangular connecting elements 8 connected to the lid 7. Alternatively, the magnets 4 may be sewn inside the halves of the triangular connecting elements 8 which are closer to the body of the bag, and the metal plates 3 in halves closer to the lid 7. In yet another configuration the magnets 4 can be sewn inside one triangular connecting element 8 closer to the body of the bag, and metal plates 3 in another one closer to the lid 7, sewing them respectively in pairs. Metal plates 3 and magnets 4 may be in each case single, or they may consist of several plates/magnets, e.g. 2, 3, 4 or 5 metal plates and 2, 3, 4 or 5 magnets, in order to ensure the necessary elasticity of the triangular connecting elements.

Metal plates 3 and magnets 4 are sewn inside the triangular connecting element 8 such that the bending lines 9 dividing the triangular elements 8 into halves are lines of symmetry for the arrangement of metal plates 3 and magnets 4 in each of the triangular connecting elements, due to which when closing the bag, the metal plates 3 and magnets 4 are placed directly opposite each other, guaranteeing good adjacency of the halves of triangular connecting elements 8, and at the same time tight closing of the sides of the lid of the bag 7.

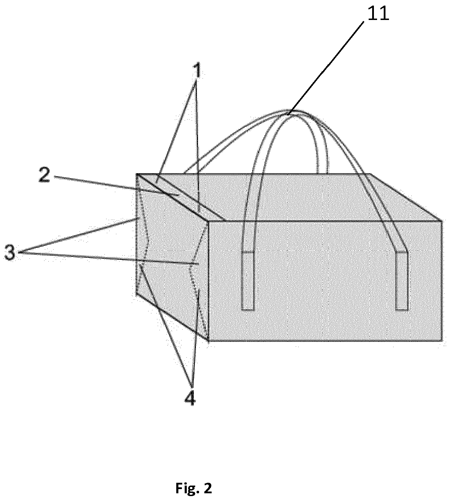

Fig. 2 clearly presents the closing of a bag for transporting pizza, which:
- is tight from the bottom due to a fixed connection of the lid to the lower wall of the cuboidal bag;
- is tight from the top, because the extension of the lid is adjacent to the upper wall of the cuboidal bag;
- is tight from both sides, because parts of the triangular connecting elements are adjacent to each other.

The adjacency of elements results directly from the use of metal plates 2 and 3 and magnets 1 and 4.

Therefore, the closure of the bag for transporting pizzas according to the invention fulfils all expectations, providing the possibility to open and close the bag with one hand as well as the tightness of the bag, guaranteeing longer sustainment of heat when transporting hot pizzas.

It is apparent that this solution may be used not only for the production of bags for transporting pizzas, but during the production of various kinds of bags for which it is desirable to provide convenient opening with one hand and tight adjacency of the lid in a closed position, e.g. postmen's bags or women's purses.

### List of references from the drawings:

1 - bar magnet(s)
2 - metal plate, with magnetic properties
3 - metal plates with magnetic properties
4 - magnets
5 - side walls
6 - bottom
7 - lid
8 - connecting element
9 - bending line
10 - extension of the lid
11 - straps

## Claims

1. A closing system of a container, said container comprising a bottom, side walls whose edges delimit an opening, while the bottom along with the side walls delimit a storage space of the container, and a lid closing the opening of the container, wherein a leading edge of the lid has an extension overlapping the side wall, said system comprises magnets and metal elements with magnetic properties fixed to the extension of the lid and the side wall which the extension overlaps, **characterised in that** the magnets (1, 4) and metal plates (2, 3) having magnetic properties are fixed on both sides of a bending line (9) of a connecting element (8) that connects a side edge of the lid (7) to an edge of the side wall (5) delimiting the opening of the container, said bending line (9) dividing the connecting element (8) into two parts.

2. The system according to claim 1, **wherein** the container has a cuboidal shape.

3. The system according to claim 1, **wherein** the connecting element (8) has a shape of a triangular element having the bending line (9) which divides said element (8) into two symmetrical and triangular halves.

4. The system according to claim 1, **wherein** the magnets (4) and the metal plates (3) are sewn inside the triangular halves of the connecting elements (8), along and symmetrically in relation to the bending line (9).

5. The system according to claim 1, **wherein** one or several metal plates (2) are sewn inside along the whole extension of the lid (10).

6. The system according to claim 1, **wherein** the magnets (1) are sewn inside along the whole edge of the wall (5) which the extension of the lid (10) overlaps.

7. A container comprising a bottom, side walls and a closing lid, **characterised in that** it further comprises a closing system according to any of the claims 1 to 6.

8. The container according to claim 7, **wherein** it is a thermal bag for transporting pizza.
